# EUROPÄISCHE PATENTSCHRIFT

(11) **EP 0 800 851 B1**
(45) Veröffentlichungstag und Bekanntmachung des Hinweises auf die Patenterteilung: **03.12.2003**
(21) Anmeldenummer: 97810208.5
(22) Anmeldetag: 09.04.1997
(51) Int. Cl.: B01D 50/00, B01D 53/74

(54) **Verfahren zur Reinigung schadstoffbelasteter Spannrahmen-Abluft**
Process for purifying air containing noxious material from a tentering frame
Procédé pour purifier de l'air contenant des produits nocifs provenant d'une rame

(30) Priorität: 13.04.1996 DE 19614712
(43) Veröffentlichungstag der Anmeldung: 15.10.1997
(73) Patentinhaber: KOENIG AG, CH-8587 Oberaach (CH)
(72) Erfinder: Natter, Arthur, 6922 Wolfurt (AT); Zürcher, Fritz, 9100 Herisau (CH)
(74) Vertreter: Clerc, Natalia

(56) Entgegenhaltungen:
- EP-A- 0 350 272
- EP-A- 0 691 156
- DE-A- 4 405 010
- US-A- 4 885 139
- US-A- 4 888 158
- US-A- 5 123 936
- US-A- 5 364 604

## Beschreibung

Aus der EP-B-334 922 ist eine Anlage zum Abscheiden von Schadstoffen aus der Abluft eines Spannrahmens bekannt. Die Abluft wird über zwei Lamellen-Wärmetauscher, die sekundärseitig von Frischluft bzw. Wasser umströmt sind, abgekühlt. In einem Tropfenabscheider werden die auskondensierten Teile abgeschieden. Schliesslich wird die abgekühlte Abluft durch Filtermatten abgezogen. Die Lamellen-Wärmetauscher dieser Anlage sind relativ schwer zu reinigen. Solche Anlagen können nur sinnvoll eingesetzt werden, wenn die im Wärmetauscher anfallende Wärme verwertet werden kann.

Andererseits sind für die Abluftreinigung Luftwäscher bekannt, zum Beispiel Rotationswäscher oder Wirbelwäscher. In diesen wird die Luft durch eine grosse Menge zirkulierenden Abwassers gewaschen. Diese bekannten Luftwäscher haben einen hohen Energiebedarf wegen des grossen Strömungswiderstandes der Abluft, für die Antriebsmotoren des Wasserzerstäubers und die Pumpleistung für die Umwälzung des Waschwassers. Durch die Kreislaufführung des Waschwassers bleibt die Abscheideleistung beschränkt, d. h. es kommt zu einer Verschleppung von geruchsaktiven Stoffen und von Salzen mit Nachteilen für die Umgebungsluft und korrosionsanfällige Anlageteile.

In der DE-A-4 405 010 ist eine Anlage zum Abscheiden von SO₂ aus dem Abgas eines Brennofens beschrieben. Das heisse Abgas wird zunächst mit einem Wasser-Sprühstrahl von 350° auf 250° abgekühlt und gelangt in einen Kanal, an dessen Eintrittsende eine Zweistoff-Düse angeordnet ist mit einem Druckluft- und einem Druckwasseranschluss. Das Wasser wird in der Düse zu einem Sprühstrahl mit einem Öffnungswinkel von 15° bis 20° zersprüht. Neben der Düse sind mehrere Aditiv-Zufuhreinrichtungen angeordnet. Die Aditivpartikel (Kalk) werden im Sprühlstrahl benetzt und reagieren darauf mit dem SO₂ des Abgases. Es wird nur so viel Wasser eingedüst, dass die Partikel nach der Reaktion mit SO₂ trocken sind, so dass sie als Pulver ausgefällt werden können. In einem anschliessenden Aufwärtsstrom wird weiteres Aditiv zugedüst, welches mit dem restlichen SO₂ reagiert und in einem anschliessenden Filter ausgeschieden wird.

In der US-A-5 364 606 ist eine Abgas-Reinigungsanlage beschrieben, die ähnlich ausgebildet ist. Bei dieser Anlage reagiert das SO₂ chemisch nicht mit einem Festkörper-Aditiv, sondern an wässrigen Aminen, die mit einer Reihe von in Serie geschalteten Zweistoff-Düsen eingedüst werden. Zum Ausscheiden der flüssigen Reaktionsprodukte dient ein anschliessender Tropfenabscheider.

Der vorliegenden Erfindung liegt die Aufgabe zugrunde, ein Verfahren zur Reinigung von Spannrahmen - Abluft anzugeben, (das) sich durch eine hohe Abscheideleistung für ölige und geruchsaktive Reizstoffe, einen geringen Energiebedarf und eine kostengünstige Bau- und Betriebsweise auszeichnet. Diese Aufgabe wird durch die Merkmalskombination des Anspruchs 1 gelöst.

Nachfolgend werden Ausführungsbeispiele der Erfindung anhand der Zeichnungen erläutert. Darin zeigt:
Figuren 1 - 4 und 6 schematische Darstellungen von fünf verschiedenen Ausführungsformen, und
Figur 5 einen Schnitt durch eine Zweistoff-Düse.

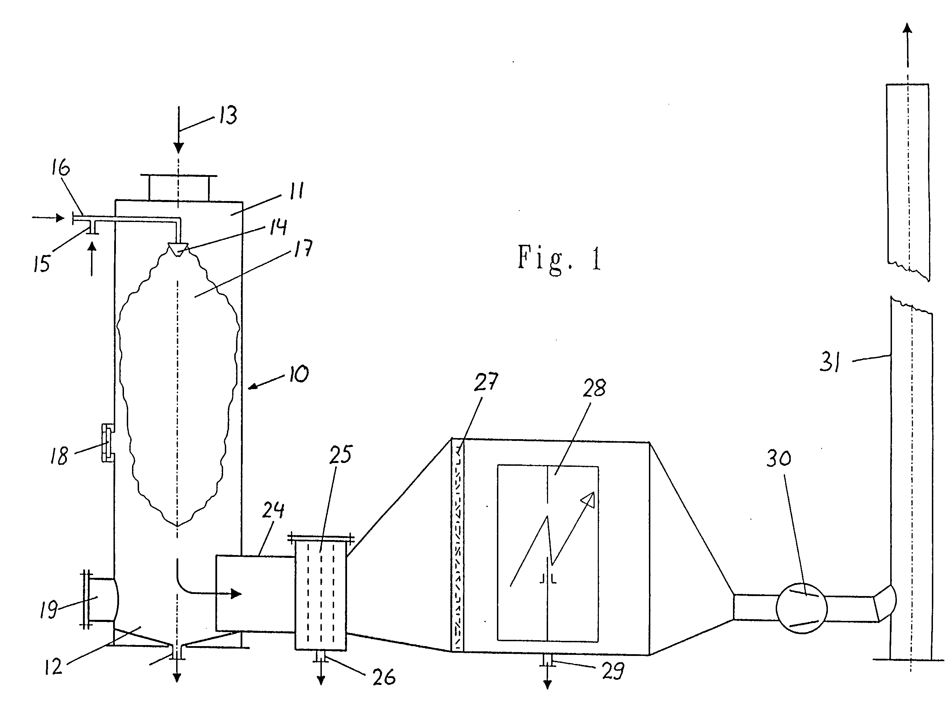

In Figur 1 ist eine erste Ausführungsform der Erfindung schematisch dargestellt. In einem rohrförmigen, senkrecht angeordneten Kanal 10 mit einem oberen Eintrittsende 11 und einem unteren Austrittsende 12 für die zu reinigende Abluft 13 ist im Bereich des Eintrittsendes 11 eine Zweistoff-Düse 14 angeordnet mit einem Frischwasseranschluss 15 und einem Druckluftanschluss 16. Der Kanal 10 ist etwa 4 bis 6 Meter lang, und die durchschnittliche Strömungsgeschwindigkeit der Abluft beträgt etwa 2 m/sec, was eine Aufenthaltszeit der Abluft im Kanal 10 von etwa 2 bis 3 sec ergibt. Die Düse 14 erzeugt im Gleichstrom mit der Abluft 13 einen feinen Wassernebel 17 im Kanal 10 mit Tröpfchengrössen im Bereich von 3 bis 100 µm, vorzugsweise 5 bis 50 µm. Die Tröpfchengrösse und die zersprühte Wassermenge kann durch Einstellen des Drucks der Druckluft oder des Wassers in weiten Grenzen eingestellt und der Abluft-Durchflussmenge angepasst werden. Durch die feinen Wassertröpfchen erfolgt eine rasche Abkühlung der z.B. 120° C - 200° C heissen, relativ trockenen Abluft und eine Kondensation wasserunlöslicher Stoffe der Abluft, z.B. von Spinnölen aus Silikon- oder Mineralölkomponenten. Ferner werden wasserlösliche und wassermischbare Bestandteile der Abluft im Wassernebel weitgehend gelöst, z.B. Glykole, Formaldehyd u.a. Durch chemische Reaktion mit dem Lösungsmittel Wasser werden aber auch typische geruchsaktive Abluftinhaltsstoffe aufgenommen, z.B. Ameisensäure und Essigsäure. Wassertröpfchen mit gelösten Fremdstoffen verdampfen langsamer und werden bei der beschrieben Einspritzkondensation angereichert. Dieser Umstand begünstigt die Abscheidung in den nachgeschalteten Stufen.

Es hat sich als zweckmässig erwiesen, das Frischwasser einer physikalischen Vorbehandlung zu unterziehen, z.B. mit magnetischen oder elektromagnetischen Feldern. Diese Wasservorbehandlung unterstützt die Zerstäubung, verbessert die Löslichkeit und verhindert haftende Kalkablagerungen.

Im Bereich des sich bildenden Nebels 17 ist ein Sichtfenster 18 und am Austrittsende 12 eine verschliessbare Reinigungsöffnung 19 am Kanal 10 montiert. Unten hat der Kanal 10 einen Wasserablauf 20.

Am Austrittsende 12 ist über einen weiteren Kanal 24 ein Lamellen-Tropfenabscheider 25 angeschlossen, über welchen die Tröpfchen über etwa 10 µm abgeschieden und in einen weiteren Ablauf 26 ausgeschleust werden. An den Lamellen-Abscheider 25 schliesst ein Drahtgestricke-Tropfenabscheider 27 an, in. welchem noch Tröpfchen oberhalb etwa 3 µm Durchmesser ausgeschieden werden. Schliesslich folgt ein Elektrofilter 28 zum Abscheiden der feinsten Tröpfchen und der Aerosole. Die abgeschiedene Phase wird über einen weiteren Ablauf 29 ausgeschleust. Die gereinigte Abluft wird mittels eines Gebläses 30 in einen Kamin 31 gefördert.

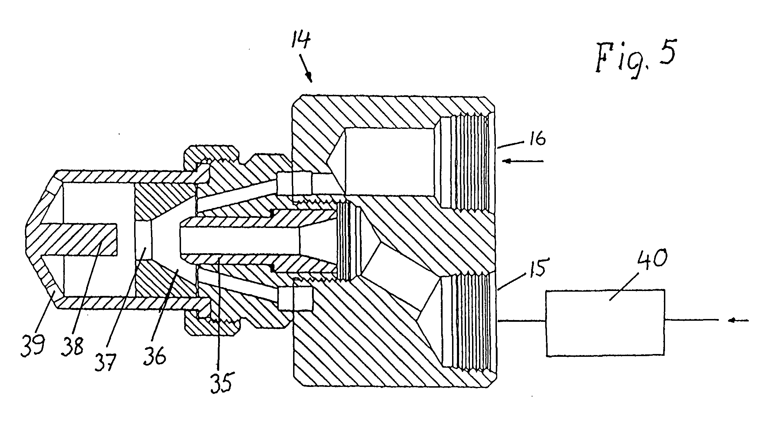

In Figur 5 ist ein Achsialschnitt durch eine geeignete Zweistoff-Düse 14 dargestellt. Das Wasser strömt durch eine zentrale Düse 35 aus. Um die Düse 35 herum ist eine Ringdüse 36 für die Druckluft angeordnet. Die Druckluft zerstäubt das Wasser. Das Wasser-Luftgemisch tritt aus einer weiteren, co-achsial zur Düse 35 angeordneten Düse 37 mit hoher Geschwindigkeit aus und trifft auf einen Amboss 38, wo die Wassertröpfchen zu einem feinen Nebel zerstäubt werden, der aus seitlichen Öffnungen 39 mit einem Öffnungswinkel von etwa 90 austritt. In Figur 5 ist in der Wasserzuleitung noch ein Gerät 40 für die physikalische Vorbehandlung des Frischwassers angedeutet.

Die beschriebene Vorrichtung ist sehr einfach aufgebaut und ermöglicht eine Reduktion des Schadstoffgehalts der Abluft bis etwa 90 % bei sehr unterschiedlicher Zusammensetzung.Die Abscheideleistung ist bei wassermischbaren und nicht mischbaren Schadstoffen sehr hoch. Die Vorrichtung eignet sich vor allem bei Anwendungen, in welchen die Restabwärme der Abluft nicht sinnvoll, z.B. zum Erwärmen von Prozesswasser, verwertet werden kann. Ein bevorzugtes Anwendungsgebiet ist die Reinigung von stark verdünnter Abluft von Spannrahmen. Der Wasserbedarf ist sehr gering. Das Wasser als Bindemittel wird kontinuirlich erneuert (selbstreinigend). Dadurch wird die Gefahr der Verschleppung durch Uebersättigung im Gegensatz zum Kreislaufbetrieb bei herkömmlichen Wäschern vermieden. Die in den Abläufen 20, 26, 29 gesammelte flüssige Phase wird zweckmässig in einer Wanne gesammelt, in welcher die wasserlöslichen Bestandteile obenauf schwimmen, abgeschöpft und als Sondermüll entsorgt werden können. Das verbleibende Wasser mit den gelösten Stoffen ist in der Regel so beschaffen, dass es in die Kanalisation geleitet werden kann. Vorzugsweise wird die Durchflussmenge des zugeführten Frischwassers so eingestellt, dass nach der Abkühlung der Abluft im Kanal 10 diese noch nicht ganz mit Wasserdampf gesättigt ist. Dies ist von Vorteil, weil dadurch die Gefahr von Durchschlägen im Elektrofilter 28 minimiert werden kann, im Gegensatz zu bekannten Luftwäschern, welche mit einem sehr hohen Wasserüberschuss arbeiten. Zudem ist der Strömungswiderstand in der Abluft durch die Vorrichtung relativ gering, so dass der Energieaufwand klein gehalten werden kann.

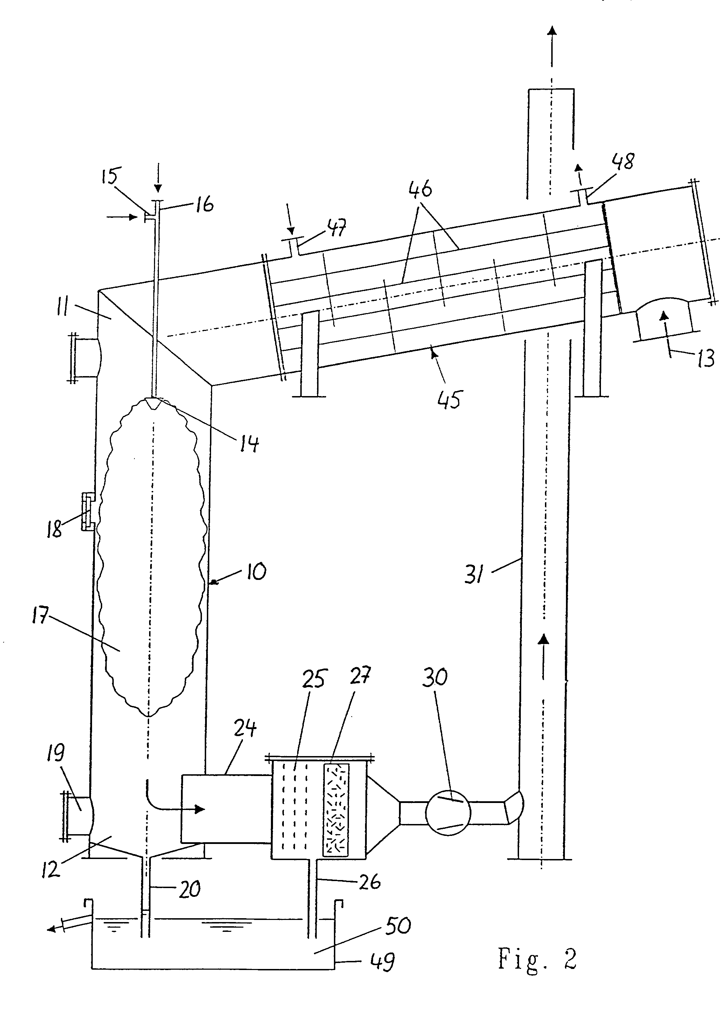

Bei den Ausführungsformen nach Figuren 2 - 4 sind analoge Teile mit gleichen Bezugszeichen versehen, so dass sich eine detaillierte Beschreibung dieser Teile erübrigt.

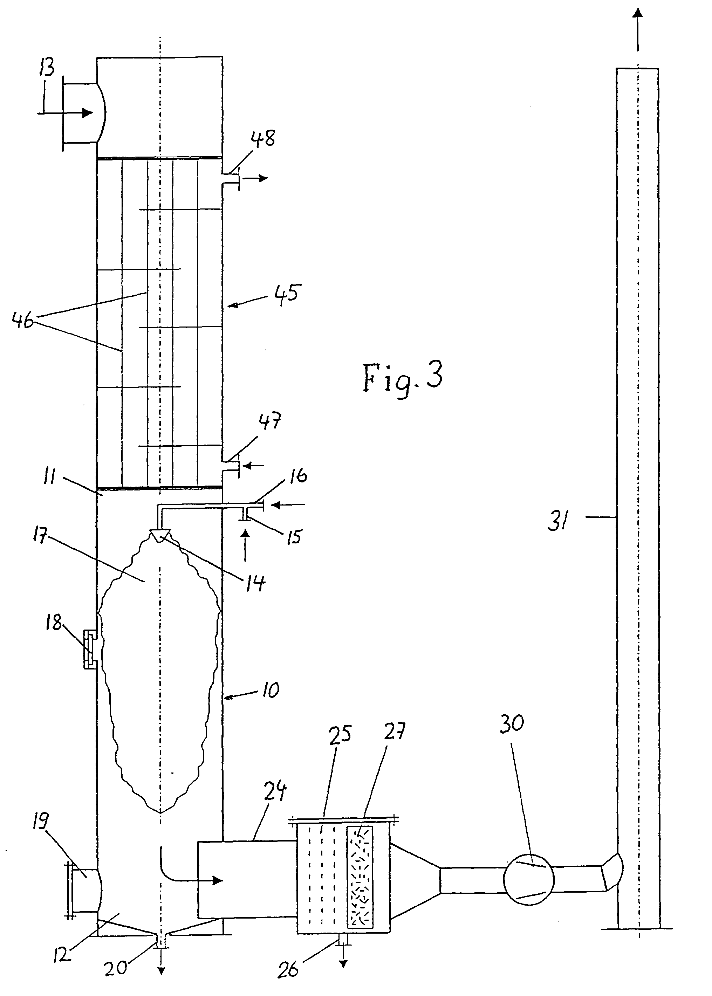

Bei der Ausführungsform nach Figur 2 ist dem Kanal 10 ein geneigt angeordneter Glattrohr-Wärmetauscher 45 vorgeschaltet, dessen bloss angedeutete, ungerippte Glattrohre 46 auf ihrer Innenseite durch die Abluft 13 durchströmt werden. Die Aussenseite der Rohre 46 wird mäanderförmig durch Brauchwasser umspült. Das Wasser wird über einen Eintrittsanschluss 47 zugeführt und über einen Austrittsanschluss 48 einem Verbraucher zugeleitet. Die Längsrichtung des Wärmetauschers 45 ist geneigt, damit sich an den Rohrwänden bildendes Kondensat, unterstützt durch die Strömung der Abluft 13 und die Schwerkraft gegen den Kanal 10 fliesst. Im Wärmetauscher 45 wird die Abluft 13 vorgekühlt und das Brauchwasser erwärmt. Diese Ausführungsform eignet sich daher vor allem in Fällen, wo Warmwasser verwendbar ist. In Figur 2 ist zusätzlich die Auffangwanne 49 für die anfallende Flüssigkeit 50 gezeigt. Bei dieser Variante ist der Elektrofilter 28 weggelassen, was bei Anwendungsfällen mit geringer Schadstoffbelastung der Abluft ausreicht. Bei höherer Schadstoffbelastung oder höherer Anforderung an die Reinheit der emittierten Abluft kann selbstverständlich auch bei der Ausführungsform nach Figur 2 den Tropfenabscheidern 25, 27 ein Elektrofilter nachgeschaltet werden. Die Ausführungsform nach Figur 3 unterscheidet von jener nach Figur 2 hauptsächlich dadurch, dass der Wärmetauscher 45 senkrecht oberhalb des Kanals 10 angeordnet ist. Diese Ausführungsform eignet sich vor allem in Anwendungen, wo genügend Raumhöhe zur Verfügung steht.

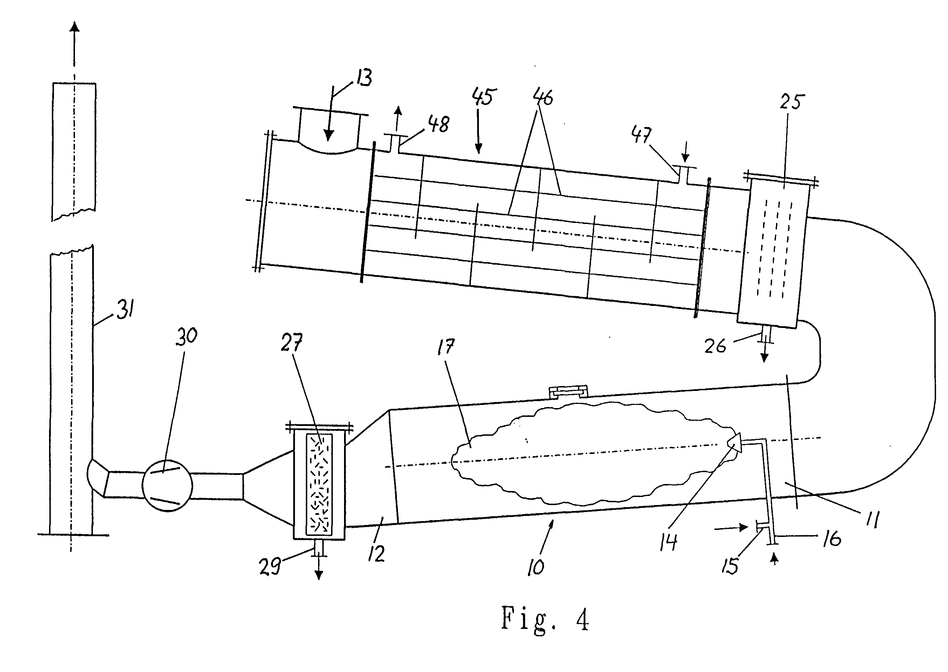

Bei der Ausführungsform nach Figur 4 sind sowohl der Wäremtauscher 45 als auch der Kanal 10 in Strömungsrichtung der Abluft 13 nach unten geneigt angeordnet, wodurch eine geringere Bauhöhe erreicht wird. Der Lamellen-Tropfenabscheider ist zwischen dem Wärmetauscher 45 und dem Kanal 10 angeordnet. Diese Anordnung eignet sich vor allem dann, wenn die Abluft im Wärmetauscher 45 relativ stark abgekühlt wird, also die Abluftwärme gut genutzt werden kann und die Abluft relativ feucht ist.

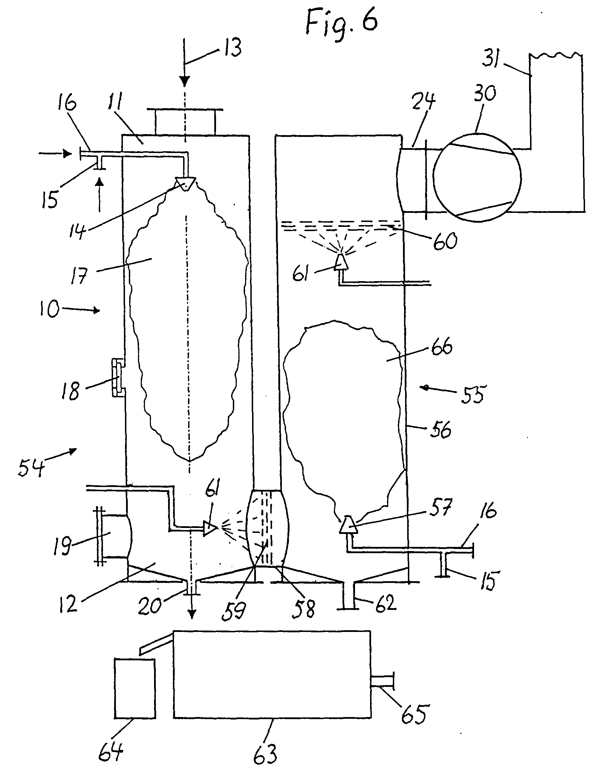

In Figur 6 ist eine weitere Ausführungsform dargestellt mit zwei in Serie geschalteten Reaktionskolonnen 54, 55. Die Kolonne 54 entspricht dem Kanal 10 gemäss Figur 1 und wird von oben nach unten durchströmt. Die Kolonne 55 ist analog aufgebaut und wird von unten nach oben durchströmt. Sie hat ebenefalls einen rohrförmigen, senkrechten Kanal 56, in den unten eine weitere Zweistoffdüse 57 eingebaut ist mit Wasser- 15 und Druckluftanschluss 16. Die Düse 57 versprüht das Wasser ebenfalls im Gleichstrom mit der durchströmenden Abluft. Die Kanäle 10, 56 sind durch ein Verbindungsrohr 58 verbunden, in welchem ein Spezial-Lamellenabscheider 59 eingebaut ist. Ein weiterer Spezial-Lamellenabscheider 60 ist im oberen Bereich des Kanals 56 vor dem Eintritt des Kanals 24 eingebaut. Stromaufwärts der Lamellenabscheider 59, 60 ist je eine Sprühdüse 61 angeordnet. Die Düsen 61 werden in einstellbaren Intervallen mit Frischwasser beaufschlagt, damit die Abscheider 59, 60 gereinigt werden. Die beiden trichterförmigen Böden der Kanäle 10, 56 münden in die Wasserabläufe 20, 62 und diese in ein Auffangbecken 63. Das obenaufschwimmende Konzentrat wird in einem Entsorgungsbehälter 64 aufgefangen. Das Überschusswasser gelangt über einen Ablauf 65 in die Kanalisation. Der Abscheider 59 ist so ausgebildet, dass er Tröpfchen ab etwa 10 bis 30 µm nach dem Fliehkraftprinzip abscheidet. Vorzugsweise wird die zweite Zweistoffdüse 57 so eingestellt, dass sie einen Nebel 66 feinster Tröpfchen erzeugt. Dementsprechend ist der Abscheider 60 so ausgebildet, dass er Tröpfchen ab etwa 5 bis 15 µm abscheidet.

Im Kanal 10 verdampft ein Teil des verdüsten Wassers. Besonders die Tropfenfraktion mit kleinstem Tropfendurchmesser verdampft sehr schnell und kühlt dabei die Abluft so weit, bis diese wasserdampfgesättigt ist. Dabei werden dampfförmige Luftschadstoffe durch Abkühlung der zu reinigenden Abluft mittels Einspritzkondensation verflüssigt (Verdampfungskühlung). Es kommt zu einer Kondensation nicht wassermischbarer (schwer löslicher) Stoffe und zur Absorption wassermischbarer, löslicher Stoffe. Dabei gelangt das heisse Rohgas schockartig zur Abkühlung bis zur Temperatur, bei der die Abluft wasserdampfgesättigt ist (ca. 45°C). Dadurch werden dampfförmige Schadstoffe weitgehend verflüssigt und koalieren mit den Wassertröpfchen des versprühten Wassernebels. In dieser ersten Stufe wird der grösste Teil der nicht wassermischbaren Luftschadstoffe abgeschieden. Gleichzeitig wird ein Teil der wasserlöslichen Schadstoffe ins Einspritzwasser eingebunden beziehungsweise im Wasser in Lösung gebracht.

Im Kanal 56 bleibt das gesamte feinstzerstäubte Frischwasser in Tropfenform und ergibt somit eine hohe Tropfendichte über den ganzen Kolonnenraum verteilt. Das zerstäubte, kalte Frischwasser wird von der wasserdampfgesättigten, aus dem Kanal 10 vorgereinigten Abluft bis nahe an die Sättigungstemperatur erwärmt. Diese Wärmeleistung führt physikalisch bedingt zu einer - wenn auch geringen - Dampfkondensation. Dieser Effekt unterstützt die Reinigungsleistung. Hohe Tropfendichte, grosse Gesamttropfenoberfläche und tiefe Oberflächentemperaturen der Tropfen sind ideale Voraussetzugen für die Verflüssigung und Bindung aerosolhaltiger Schadstoffe sowie für die Absorption wasserlöslicher Schadstoffkomponenten.

Die zweistufige Anlage gemäss Figur 6 hat vor allem folgende Vorteile: Es wird eine hohe Reinigungsleistung bedingt durch grosse Kontaktfläche feinstzerstäubten Frischwassers in beiden Kolonnen erreicht. Durch die lange Verweilzeit beziehungsweise Reaktionszeit für Schadstoffkondensation und Absorption wird die Reinigungsleistung erhöht. Die Abscheideleistung ist in vielen Fällen so hoch, dass die zulässigen Schadstoffgrenzwerte im Reingas unterschritten werden und daher auf ein elektrostatisches Filter verzichtet werden kann.

## Patentansprüche

1. Verfahren zur Reinigung von Spannrahmen-Abluft, **dadurch gekennzeichnet, dass** die Abluft (13) über ein Eintrittsende (11) in einen Kanal (10) geleitet wird, dass mittels einer benachbart dem Eintrittsende (11) im Kanal (10) angeordneten regelbaren Zweistoff-Düse (14) mit einem Druckwasseranschluss (15) und einem Druckluftanschluss (16) zu einem feinen Nebel (17) zerstäubtes Wasser in den Kanal (10) zugeführt wird, dass die Abluft und das zerstäubte Wasser zu einem an einem Austrittsende (12, 58) des Kanals (10) angeschlossenen Tropfenabscheider (25, 59) geführt werden und dass die gereinigte Abluft über ein Gebläse (30) in einen Kamin (31) gefördert wird.

2. Verfahren nach Anspruch 1, wobei das zerstäubte Wasser und die Abluft zuerst zu einem Lamellen-Tropfenabscheider (25) und anschliessend zu einem Drahtgestricke-Tropfenabscheider (27) geleitet werden.

3. Verfahren nach Anspruch 1 oder 2, wobei die Abluft nach dem Tropfenabscheider (25) bzw. den Tropfenabscheidern (25, 27) einem Elektrofilter (28) zugeführt wird.

4. Verfahren nach einem der Ansprüche 1 - 3, wobei die Abluft vor Eintritt in den Kanal (10) mittels eines Glattrohr-Wärmetauschers (45) vorgekühlt wird, wobei das Innere der Glattrohre (46) durch die Abluft durchströmt wird.

5. Verfahren nach einem der Ansprüche 1 - 4, wobei die Zweistoff-Düse (14) geregelt wird, insbesondere durch Regelung des Drucks des Wassers und/oder der Druckluft.

6. Verfahren nach einem der Ansprüche 1 - 5, wobei die Zweistoff-Düse (14) so eingestellt wird, dass der Tröpfchendurchmesser des zerstäubten Wassers im Bereich von 3 µm bis 100 µm, vorzugsweise 5 µm - 50 µm ist.

7. Verfahren nach einem der Ansprüche 1 - 6, wobei der Wassernebel (17) durch die Zweistoff-Düse (14) im Gleichstrom mit der Abluft (13) eingesprüht wird.

8. Verfahren nach einem der Ansprüche 1 - 7, wobei durch den Druckwasseranschluss (15) Frischwasser zugeführt wird.

9. Verfahren nach einem der Ansprüche 1 - 8, wobei das durch den Druckwasseranschluss zugeführte Wasser physikalisch vorbehandelt wird.

10. Verfahren nach einem der Ansprüche 1 - 9, wobei die Abluft nach dem ersten Kanal (10) in einen zweiten Kanal (56) geleitet wird, an dessem stromaufwärtigen Ende mittels einer zweiten Zweistoff-Düse (57) mit einem Frischwasseranschluss (15) und einem Druckluftanschluss (16) zu einem feinen Nebel zerstäubtes Wasser zugeführt wird, und wobei das zerstäubte Wasser und die Abluft am stromabwärtigen Ende des zweiten Kanals (56) zu einem zweiten Lamellen-Abscheider (60) zugeführt werden.

11. Verfahren nach einem der Ansprüche 1-10, wobei das zerstäubte Wasser in einem Austrittswinkel von ungefähr 90° aus der Zweistoff-Düse (14) austritt.

12. Verfahren nach einem der Ansprüche 1-11, wobei die Zweistoff-Düse (14) eine zentrale erste Düse (35) aufweist, die mit dem Druckwasseranschluss (15) verbunden ist, eine die erste Düse (35) umgebende, koaxiale Ringdüse (36), die an den Druckluftanschluss (16) angeschlossen ist, eine stromabwärts der ersten Düse (37) und der Ringdüse (36) angeordnete, koaxiale zweite Düse (37), einen stromabwärts der zweiten Düse (37) angeordneten, koaxialen Amboss (38) sowie mehrere seitlich des Ambosses (38) angeordnete, geneigt zur Achse der Düsen (35-37) verlaufende Öffnungen (38).

13. Verfahren nach einem der Ansprüche 1 - 12, wobei stromaufwärts des Lamellen-Tropfenabscheiders (25, 59) eine Sprühdüse (61) angeordnet ist, die intervallmässig Frischwasser zuführt.

## Claims

1. Method for the purification of tentering-frame waste air, **characterized in that** the waste air (13) is conducted via an inlet end (11) into a duct (10), **in that** water atomized into a fine mist (17) is fed into the duct (10) by means of a regulatable dual-substance nozzle (14) arranged in the duct (10) adjacently to the inlet end (11) and having a pressure-water connection (15) and a compressed-air connection (16), **in that** the waste air and atomized water are led to a drop separator (25, 59) connected to an outlet end (12, 58) of the duct (10) and **in that** the purified waste air is conveyed into a chimney (31) via a blower (30).

2. Method according to Claim 1, the atomized water and the waste air being conducted first to a lamellar drop separator (25) and subsequently to a knitted-wire drop separator (25, 27).

3. Method according to Claim 1 or 2, the waste air being fed to an electrostatic filter (28) downstream of the drop separator (25) or of the drop separators (25, 27).

4. Method according to one of Claims 1-3, the waste air being precooled by means of a smooth-tube heat exchanger (45) before entry into the duct (10), the waste air flowing through the interior of the smooth tubes (46).

5. Method according to one of Claims 1-4, the dual-substance nozzle (14) being regulated, in particular, by the regulation of the pressure of the water and/or of the compressed air.

6. Method according to one of Claims 1-5, the dual-substance nozzle (14) being set in such a way that the droplet diameter of the atomized water is in the range of 3µm to 100µm, preferably 5µm - 50µm.

7. Method according to one of Claims 1-6, the water mist (17) being sprayed through the dual-substance nozzle (14) in co-current with the waste air (13).

8. Method according to one of Claims 1-7, fresh water being fed by means of the pressure-water connection (15).

9. Method according to one of Claims 1-8, the water fed by means of the pressure-water connection being pretreated physically.

10. Method according to one of Claims 1-9, the waste air being conducted, downstream of the first duct (10), into a second duct (56), at the upstream end of which water atomized into a fine mist is fed by means of a second dual-substance nozzle (57) having a fresh-water connection (15) and a compressed-air connection (16), and the atomized water and the waste air being fed, at the downstream end of the second duct (56), to a second lamellar separator (60).

11. Method according to one of Claims 1-10, atomized water emerging from the dual-substance nozzle (14) at an outlet angle of approximately 90°.

12. Method according to one of Claims 1-11, the dual-substance nozzle (14) having a central first nozzle (35) which is connected to the pressure-water connection (15), a coaxial annular nozzle (36) which surrounds the first nozzle (35) and is connected to the compressed-air connection (16), a coaxial second nozzle (37) arranged downstream of the first nozzle (37) and of the annular nozzle (36), a coaxial anvil (38) arranged downstream of the second nozzle (37), and a plurality of orifices (38) arranged laterally in relation to the anvil (38) and running at an inclination to the axis of the nozzles (35-37).

13. Method according to one of Claims 1-12, a spray nozzle (61), which feeds fresh water at intervals, being arranged upstream of the lamellar drop separator (25, 59).

## Revendications

1. Procédé pour la purification d'air évacué de rame, **caractérisé en ce que** l'air évacué (13) est alimenté par une extrémité d'admission (11) dans un canal (10), que, à l'aide d'une buse binaire (14) réglable disposée à proximité de l'extrémité d'admission (11) dans le canal (10) avec une arrivée d'eau sous pression (15) et une arrivée d'air comprimé (16), de l'eau pulvérisée en un brouillard (17) fin est introduite dans le canal (10), que l'air évacué et l'eau pulvérisée sont acheminés vers un séparateur de gouttes (25, 59) branché à une extrémité de sortie (12, 58) du canal (10) et que l'air évacué purifié est envoyé dans une cheminée (31) par une ventilation (30).

2. Procédé selon la revendication 1, l'eau pulvérisée et l'air évacué passant tout d'abord par un séparateur de gouttes à lamelles (25) puis par un séparateur de gouttes à maillage en fil de fer (27) .

3. Procédé selon une des revendications 1 ou 2, l'air évacué étant acheminé à un dépoussiéreur électrostatique (28) après être passé par le séparateur de gouttes (25) ou les séparateurs de gouttes (25, 27).

4. Procédé selon une des revendications 1 à 3, l'air évacué étant pré-refroidi à l'aide d'un échangeur de chaleur à tubes lisses (45) avant son entrée dans le canal (10), l'intérieur des tubes lisses (46) étant balayé par l'air évacué.

5. Procédé selon une des revendications 1 à 4, la buse binaire (14) étant réglée, en particulier par le réglage de la pression de l'eau et/ou de l'air comprimé.

6. Procédé selon une des revendications 1 à 5, la buse binaire (14) étant réglée de sorte que le diamètre des gouttelettes de l'eau pulvérisée se situe dans la plage de 3 µm à 100 µm, de préférence de 5 µm à 50 µm.

7. Procédé selon une des revendications 1 à 6, le brouillard d'eau (17) étant pulvérisé par la buse binaire (14) en courant parallèle avec l'air évacué (13).

8. Procédé selon une des revendications 1 à 7, le branchement d'eau sous pression (15) apportant de l'eau fraîche.

9. Procédé selon une des revendications 1 à 8, l'eau apportée par le branchement d'eau sous pression ayant reçu un traitement physique préalable.

10. Procédé selon une des revendications 1 à 9, l'air évacué étant acheminé après le premier canal (10) dans un deuxième canal (56) à l'extrémité amont duquel de l'eau pulvérisée en un brouillard fin est alimentée au moyen d'une deuxième buse binaire (57) comportant un branchement d'eau fraîche (15) et un branchement d'air comprimé (16) et l'eau pulvérisée et l'air évacué étant alimentés à l'extrémité aval du deuxième canal (56) vers un deuxième séparateur à lamelles (60).

11. Procédé selon une des revendications 1 à 10, l'eau pulvérisée sortant de la buse binaire (14) avec un angle de sortie d'environ 90°.

12. Procédé selon une des revendications 1 à 11, la buse binaire (14) présentant une première buse centrale (35) reliée au branchement d'eau sous pression (15), une buse annulaire (36) coaxiale entourant la première buse (35), la buse annulaire (36) étant branchée au branchement d'air comprimé (16), une deuxième buse (37) coaxiale disposée en aval de la première buse (37) et de la buse annulaire (36), une enclume (38) coaxiale disposée en aval de la deuxième buse (37) ainsi que plusieurs ouvertures (38) disposées latéralement par rapport à l'enclume (38) et inclinées par rapport aux axes des buses (35-37).

13. Procédé selon une des revendications 1 à 12, une buse de vaporisation (61) étant disposée en amont du séparateur de gouttes à lamelles (25, 59) pour alimenter par intervalles en eau fraîche.
